# EUROPÄISCHE PATENTSCHRIFT

(11) **EP 2 467 624 B1**
(45) Veröffentlichungstag und Bekanntmachung des Hinweises auf die Patenterteilung: **11.09.2013**
(21) Anmeldenummer: 10739877.8
(22) Anmeldetag: 15.07.2010
(51) Int. Cl.: F16H 7/08

(54) **RINGFEDERELEMENT FÜR EINEN HYDRAULISCHEN RIEMENSPANNER**
ANNULAR SPRING ELEMENT FOR AN HYDRAULIC TENSIONER
ELEMENT DE RESSORT ANNULAIRE POUR UN TANDEUR HYDRAULIQUE

(30) Priorität: 20.08.2009 DE 102009038219
(43) Veröffentlichungstag der Anmeldung: 27.06.2012
(73) Patentinhaber: Schaeffler Technologies AG & Co. KG, 91074 Herzogenaurach (DE)
(72) Erfinder: KOWALSKI, Marco, 91074 Herzogenaurach (DE)
(86) Internationale Anmeldenummer: PCT/EP2010/060224
(87) Internationale Veröffentlichungsnummer: WO 2011/020658

(56) Entgegenhaltungen:
- WO-A1-2005/108823
- DE-A1-102006 055 467
- DE-U1- 29 508 244
- US-A- 4 940 447

## Beschreibung

### Gebiet der Erfindung

Die Erfindung betrifft ein hydraulisches Spannsystem eines Zugmitteltriebs, umfassend ein topfartiges, einen Zylinder bildendes Gehäuse, zur Aufnahme eines linear verschiebbaren Kolbens, die gemeinsam eine Kolben-Zylinder-Einheit bilden und einen mit Hydraulikfluid gefüllten Druckraum begrenzen, wobei eine Relativbewegung zwischen dem Kolben und dem Zylinder einen Austausch des Hydraulikfluids von dem Druckraum in einen Vorratsraum oder in umgekehrter Richtung auslöst.

### Hintergrund der Erfindung

Die in Zugmitteltrieben von Brennkraftmaschinen eingesetzten hydraulischen Spannsysteme erfordern ein schnelles Ansprechverhalten, um in allen Betriebszuständen sowie bei hochfrequenten Schwingungen des Zugmittels stets eine ausreichende Vorspannung und Dämpfung zu gewährleisten. Um dieser Forderung zu entsprechen, sind die in hydr. Spannsystemen integrierten Rückschlagventile so auszulegen, damit nach einem Absteuern des Hydraulikfluids über einen Leckspalt in den Vorratsraum, bei dem durch die Scherkräfte des Hydraulikfluids eine Dämpfung erzeugt wird, der Druckraum kurzzeitig mit Hydraulikfluid aufgefüllt werden kann.

Aus der US 49 40 447 ist ein hydr. Spannsystem bekannt, bei dem zur Dämpfung das Hydraulikfluid zwischen einem Vorratsraum und einem Druckraum über ein Einwegventil oder Rückschlagventil ausgetauscht werden kann. Bei diesem Spannsystem wird als Rückschlagventil ein plattenförmig gestalteter Ventilkörper mit einer zentrischen Öffnung eingesetzt. Das im Einbauzustand nicht ganzflächig abgestützte Ventil kann zu einer instabilen Position des Ventilkörpers führen, mit der Gefahr einer nachteiligen Geräuschentwicklung.

Die Spannvorrichtung gemäß der DE 10 2004 018 566 A1 umfasst ein Einwegventil mit ebenfalls einem scheibenförmigen Ventilkörper. Der konstruktive Aufbau schließt zumindest drei zur Komplettierung des Rückschlagventils erforderliche Einzelteile ein, die ein aufwändiges Herstellverfahren und Handling bei der Montage erfordern.

In bekannten hydr. Spannsystemen erfolgt ein Austausch des Hydraulikfluids abhängig von der Stellbewegung des Kolbens üblicherweise über ein als Kugelrückschlagventil ausgebildetes Einwegventil sowie in umgekehrter Richtung über einen Leckspalt zwischen dem Kolben und dem Zylinder. Mit dem Kugelrückschlagventil stellen sich aufgrund einer schwierigen Anpassung des Spannsystems an den Motor vielfach keine optimalen Arbeitsbedingungen des Spannsystems ein, d.h. die von Herstellern der Brennkraftmaschinen geforderten Dämpfungswerte sind häufig nicht realisierbar. Die Darstellung eines die Dämpfung des Spannsystems unmittelbar beeinflussenden Leckspaltes zwischen der Kolbenmantelfläche und der Innenwandung des Zylinders erfordert einen erhöhten Fertigungsaufwand, um ein Einbauspiel für einen definierten Leckspalt zu realisieren.

Die zu erzeugende Dämpfkraft des hydraulischen Spannsystems ist abhängig von der Leckspaltgröße, von der Viskosität des Hydraulikfluids, die von den Temperaturen beeinflusst wird und von einem Impuls, der beispielsweise durch eine Schwingung des Zugmittels auf das hydraulische Spannsystem übertragen wird. In heutigen Spannsystemen erfolgt für die jeweilige Anwendung bzw. Einbausituation des Spannsystems eine Festlegung des Dämpfkraftbereichs, in dem die Viskosität in Abhängigkeit der Temperatur beachtet wird sowie der Leckspalt bzw. die Leckspaltgröße bei der Montage mittels einer Gruppier- und Messvorrichtung hergestellt und montiert wird.

Ein gattungsgemäßes Spannsystem ist aus der DE 295 08 244 U1 bekannt.

### Aufgabe der Erfindung

Der vorliegenden Erfindung liegt die Aufgabe zugrunde, für ein hydr. Spannsystem ein bauraum- und bauteiloptimiertes, kostengünstig herstellbares Einwegventil bereitzustellen.

### Zusammenfassung der Erfindung

Zur Lösung dieser Problemstellung umfasst das erfindungsgemäße hydr. Spannsystem in einem Zuströmweg für das Hydraulikfluid zwischen dem Vorratsraum und dem Druckraum in der Kolben-Zylinder-Einheit zumindest ein als Einwegventil eingesetztes druckabhängig öffnendes Ringfederelement bzw. Ringfederventil.

Das in der Funktion mit einem Rückschlagventil vergleichbare Ringfederventil ist so ausgeführt, dass in der Dämpfungsfunktion des Spannsystems das Ringfederventil schließt und eine Abdichtung bewirkt. Nach einer umgekehrten Stellbewegung des Kolbens, bei dem sich im Druckraum ein Unterdruck einstellt, und der Unterdruck eine Rückstellkraft des Ringfederventils überwindet, erfolgt ein Durchfluss des Hydraulikfluids von dem Vorratsraum in den Druckraum. Durch die Anwendung des erfindungsgemäßen Ringfederventils in einem hydraulischen Spannsystem kann der Einbau eines bislang eingesetzten Kugel- oder Plattenventils entfallen. Neben einer vereinfachten Fertigung stellt sich weiterhin im Vergleich zu einem bisher eingesetzten Kugelventil ein reduzierter Bauteilumfang des hydraulischen Spannsystems ein, wodurch sich insgesamt ein Kostenvorteil einstellt. Ein weiterer Vorteil der Erfindung besteht darin, dass in Verbindung mit dem Ringfederventil ein hydraulisches Spannsystem vereinfacht an gewünschte Betriebsbedingungen optimal anpasst werden kann. Außerdem bietet die Erfindung die Möglichkeit, eine große Variantenvielfalt der zum Einsatz kommenden hydraulischen Spannsysteme abzudecken. Das erfindungsgemäße Ringfederventil ist bevorzugt für kostenoptimierte Spannsysteme einsetzbar. Die erfindungsgemäße Ausgestaltung ermöglicht, dass das hydraulische Spannsystem in verbesserter Weise an den konkreten Bedarfsfall angepasst werden kann, Die benötigte Abstimmung auf eine konkrete Motordynamik kann mit der vorgeschlagenen Ausgestaltung einfach vorgenommen werden, was verglichen mit bisherigen Lösungen zu einem insgesamt verbesserten Betriebsverhalten führt.

Die Erfindung sieht entweder vor, dass zur Bildung des Ringfederventils der Zylinder im Bereich des Druckraums zumindest eine Öffnung aufweist, die mit einem an der Innenwandung des Zylinders positionierten, in Schließrichtung vorgespannten Federelement zusammenwirkt. Das Federelement bewirkt bis zum Erreichen eines Öffnungsdrucks eine wirksame Abdichtung der Öffnung und vermeidet damit eine Strömung beziehungsweise einen Austausch von Hydraulikfluid zwischen dem Druckraum und dem Vorratsraum oder in umgekehrter Richtung.

Die Erfindung sieht alternativ als Ringfederventil ein Federelement vor, das unmittelbar oder mittelbar den Zylinder umschließt und mit zumindest einer den Vorratsraum verbindenden Öffnung zusammenwirkt.

Weitere vorteilhafte Ausgestaltungen der Erfindung sind Gegenstand der abhängigen Ansprüche 2 bis 10.

Vorteilhaft ist dabei die als radiale Bohrung gestaltete Öffnung in einem dem Zylinder druckraumseitig zugeordneten Verschlusselement eingebracht, die mit einer Sacklochbohrung des Verschlusselementes verbunden ist. Die Auslegung des Federelementes erfolgt so, dass dieses bei einer Druckdifferenz zwischen dem Druckraum und dem Vorratsraum, einem Unterdruck im Druckraum, sich begrenzt radial nach außen verlagert und die Öffnung freigibt, wodurch das Hydraulikfluid in den Druckraum nachströmen kann.

Vorteilhaft schließt der Zylinder in einer Ebene mehrere umfangsverteilt positionierte Öffnungen ein, die in einer Neutralstellung des Kolbens bzw. bis zum Erreichen eines Öffnungsdrucks, d. h. einem Unterdruck in dem Druckraum von dem Federelement wirksam verschlossen sind.

Gemäß der Erfindung bietet es sich an, ein hydraulisches Spannsystem zu schaffen, bei dem die Kolben-Zylinder-Einheit ein erstes, als Ringfederventil ausgebildetes, dem Zuströmweg zugeordnetes Einwegventil umfasst, sowie zur Dämpfung des Spannsystems in dem Abströmweg zwischen dem Kolben und dem Zylinder einen definierten Leckspalt.

Das Federelement des Ringfederelementes ist bevorzugt in einer V-förmig gespreizten Ringnut formschlüssig positioniert. Eine gewünschte schnelle Ansprechbarkeit, d. h. optimale Schalthysterese des Ringfederelementes wird erreicht, indem das Federelement mit mehreren, relativ großen Öffnungen des Zylinders zusammenwirkt. Damit kann bei einer auftretenden Druckdifferenz zwischen dem Druckraum und dem Vorratsraum der hydraulische Druck eine größere Fläche des Ringelementes beaufschlagen. Weiterhin verringert sich dadurch bei geöffnetem Ringfederventil vorteilhaft ein Strömungswiderstand des Hydraulikfluids bei einer Durchströmung des Ringfederventils.

Als Federelement eignet sich vorzugsweise ein radial vorgespannter aus einem runden Federdraht hergestellter Sprengring. Die Erfindung ist dabei nicht auf ein unrundes Querschnittsprofil für den Federdraht beschränkt, sondern schließt beispielsweise auch ein quadratisches oder rechteckförmiges Profil ein.

Außerdem bietet es sich gemäß der Erfindung an, dass die Öffnung des Zylinders mit einem aus Kunststoff hergestellten Federelement zusammenwirkt. Dazu wird ein Werkstoff ausgewählt, der alle Anforderungen hinsichtlich der Dauerfestigkeit und Funktion erfüllt, zur Erzielung einer ausreichenden Lebensdauer des hydraulischen Spannsystems.

Eine bevorzugte konstruktive Ausgestaltung der Erfindung sieht vor, dass der Zuströmweg für das Hydraulikfluid einen Kanal einschließt, der einen Bereich, indem die Öffnungen des Zylinders münden, mit dem Vorratsraum verbindet, der radial von einem die Kolben-Zylinder-Einheit beabstandet umschließenden Gehäuse und dem Zylinder der Kolben-Zylinder-Einheit begrenzt ist. Der Zuströmweg für das Hydraulikfluid kann beispielsweise als Bohrung ausgeführt werden, die radial versetzt zur Außenkontur des Zylinders in der Kolben-Zylinder-Einheit eingebracht ist.

Als Maßnahme um eine dauerhafte Funktion des erfindungsgemäßen Ringfederventils zu gewährleisten, ist das eine Trennfuge aufweisende Federelement lageorientiert eingesetzt. Dazu eignet sich beispielsweise eine dem Zylinder zugeordnete, radial vorstehende Zentriernase, die formschlüssig in die Trennfuge des Federelementes eingreift und damit eine definierte Einbaulage des Federelementes sicherstellt, bei der alle Öffnungen im Zylinder dichtend abgedeckt sind.

### Kurze Beschreibung der Zeichnungen

Ein bevorzugtes Ausführungsbeispiel der Erfindung ist in den Zeichnungen dargestellt, die nachfolgend näher beschrieben werden. Es zeigen:
- Fig. 1: eine erste erfindungsgemäße Kolben-Zylinder-Einheit eines hydr. Spannsystems, in Verbindung mit einem Ringfederventil;
- Fig. 2: eine zweite erfindungsgemäße Kolben-Zylinder-Einheit eines hydr. Spannsystems, in Verbindung mit einem Ringfederventil;
- Fig. 3: ein Federelement des Ringfederventils als Einzelteil;
- Fig. 4: in einer Schnittansicht ein hydr. Spannsystem bekannter Bauweise.

### Detaillierte Beschreibung der Zeichnungen

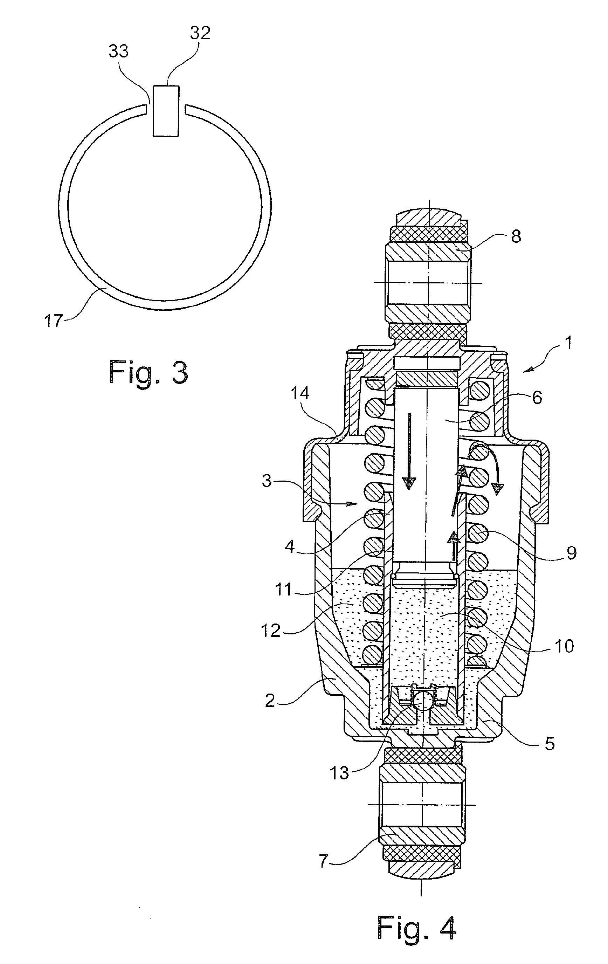

Nachfolgend die Beschreibung eines bekannten hydraulischen Spannsystems 1 gemäß Figur 4. Der Aufbau des Spannsystems 1 umfasst ein topfartig gestaltetes Gehäuse 2, in dem zentrisch eine Kolben-Zylinder-Einheit 3 eingebracht ist. Ein Zylinder 4 ist ortsfest in einem Boden 5 der Kolben-Zylinder-Einheit 3 lagefixiert und zur Aufnahme eines im Zylinder 4 verschiebbaren Kolbens 6 bestimmt. Sowohl das Gehäuse 2 wie auch der Kolben 6 weisen jeweils ein Befestigungsauge 7,8 auf, über die das Spannsystem 1 im Betriebszustand befestigt ist. Eine zwischen dem Boden 5 des Gehäuses 2 und dem Kolben 6 eingesetzte Druckfeder 9 bewirkt eine Spreizkraft, die beispielsweise in Verbindung mit einer mittelbar dem Spannsystem 1 zugeordneten, in Figur 4 nicht abgebildeten Spannrolle ein Zugmittel eines Zugmitteltriebs spannt. Der Zylinder 4 sowie der Kolben 6 der Kolben-Zylinder-Einheit 3 begrenzen einen mit einem Hydraulikfluid gefüllten Druckraum 10. Bei einer Stellbewegung des Kolbens 6 in Pfeilrichtung wird diese Bewegung gedämpft, indem eine Teilmenge des Hydraulikfluids über einen Leckspalt 11 zwischen einer Mantelfläche des Kolbens 6 und einer Innenwandung des Zylinders 4 aus dem Druckraum 10 in einen die Kolben-Zylinder-Einheit 3 umschließenden Vorratsraum 12 verdrängt wird, gemäß den in einer Reihe angeordneten Pfeilen. Bei einer der Pfeilrichtung entgegengesetzten Stellbewegung des Kolbens 6 entsteht im Druckraum 10 eine Druckdifferenz, ein Unterdruck, der ein Nachströmen des Hydraulikfluids aus dem Vorratsraum 12 ermöglicht, verdeutlicht durch zwei parallele Pfeile. Dazu öffnet ein bodenseitig im Zylinder 4 angeordnetes als Kugelventil 13 ausgebildetes Einwegventil bis zur Erreichung eines Druckausgleichs zwischen dem Druckraum 10 und dem Vorratsraum 12. Als Maßnahme zur Abdichtung des Vorratsraums 12 ist eine auch als Gummimembran zu bezeichnende Balgdichtung 14 vorgesehen, die an dem Kolben 6 und dem Gehäuse 2 befestigt ist.

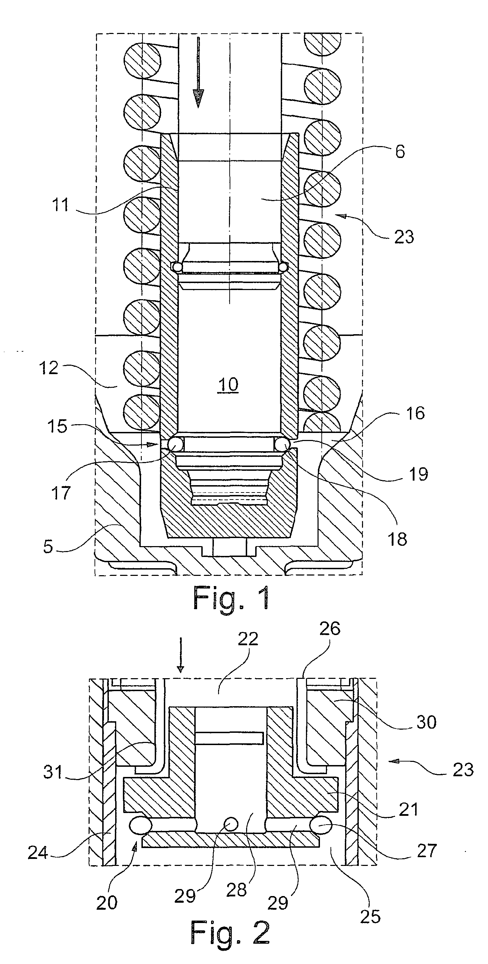

Figur 1 zeigt die Kolben-Zylinder-Einheit 3 in einer vergrößerten Darstellung, die weitestgehend der Figur 4 entspricht. Übereinstimmend mit der bekannten Lösung erfolgt die Dämpfung einer Kolbenstellbewegung in Pfeilrichtung über den Leckspalt 11. Bei einer umgekehrten Stellbewegung des Kolbens 6 stellt sich ein Vakuum zwischen dem Druckraum 10 und dem Vorratsraum 12 ein. Sobald der Druckunterschied 10 ein Öffnen des bodenseitig dem Zylinder 4 zugeordneten Ringfederventils 15 bewirkt, strömt das Hydraulikfluid aus dem Vorratsraum 12 über einen Zuströmweg 16, radiale Öffnungen 19 in dem Zylinder 4, in den Druckraum 10. Das Ringfederventil 15 wird gebildet aus einem Federelement 17, das innenseitig des Zylinders 4 in einer umlaufenden Ringnut 18 eingesetzt ist. Zum Öffnen verlagert sich das Federelement 17 radial nach innen und ermöglicht damit eine Fluidströmung in den Druckraum 10.

Die Figur 2 zeigt die Kolben-Zylindereinheit 23 mit einem alternativ zu Figur 1 ausgebildeten Ringfederventil 20. Das Ringfederventil 20 ist einem Verschlusselement 21 zugeordnet, welches endseitig an dem Kolben 26 lagefixiert ist und in den Druckraum 25 ragt. Abweichend zu Figur 2 bildet der als ein Hohlkörper gestaltete Kolben 26 gleichzeitig den Vorratsraum 22. Das ein Federelement 27 einschließende Ringfederventil 20 hat bei einer Stellbewegung des Kolbens 26 in Pfeilrichtung die Aufgabe, eine Strömung des Hydraulikfluids aus dem Druckraum 25 in den Vorratsraum 22 über als radiale Bohrungen gestaltete Öffnungen 29 sowie einer Sacklochbohrung 28 des Verschlusselementes 21 zu verhindern. Zur Erzielung einer gedämpften Stellbewegung gelangt eine Teilmenge des Hydraulikfluids über den sich zwischen einer Führungshülse 30 sowie dem Kolben 26 einstellenden Leckspalt 31 von dem Druckraum 25 in den Vorratsraum 22. Eine umgekehrte Stellbewegung des Kolbens 26 löst einen Unterdruck (Vakuum) in dem Druckraum 25 aus, bei dem sich das Federelement 27 radial in Richtung des Zylinders 24 bewegt und dabei eine Fluidströmung aus dem Vorratsraum 22 über einen Zuströmweg 34 durch die Sacklochbohrung 28 und die Öffnungen 29 in den Druckraum 25 ermöglicht.

In Figur 3 ist das eine Sprengfuge oder Trennfuge 23 aufweisende Federelement 17 gemäß Figur 1 abgebildet. Als Federelement 17 eignet sich bevorzugt ein radial vorgespannter Sprengring, der bei geschlossenem Ringfederventil 15 dichtend in der Ringnut 18 eingepasst ist. Zur Erzielung einer lageorientierten Einbaulage greift eine mit dem Gehäuse 2 oder dem Zylinder 4 verbundene Zentriernase 32 formschlüssig in eine Trennfuge 33 des Federelements 17.

### Bezugszahlenliste

- 1: Spannsystem
- 2: Gehäuse
- 3: Kolben-Zylinder-Einheit
- 4: Zylinder
- 5: Boden
- 6: Kolben
- 7: Befestigungsauge
- 8: Befestigungsauge
- 9: Druckfeder
- 10: Druckraum
- 11: Leckspalt
- 12: Vorratsraum
- 13: Kugelventil
- 14: Balgdichtung
- 15: Ringfederventil
- 16: Zuströmweg
- 17: Federelement
- 18: Ringnut
- 19: Öffnung
- 20: Ringfederventil
- 21: Verschlusselement
- 22: Vorratsraum
- 23: Kolben-Zylinder-Einheit
- 24: Zylinder
- 25: Druckraum
- 26: Kolben
- 27: Federelement
- 28: Sacklochbohrung
- 29: Öffnung
- 30: Führungshülse
- 31: Leckspalt
- 32: Zentriernase
- 33: Trennfuge
- 34: Zuströmweg

## Patentansprüche

1. Hydraulisches Spannsystem eines Zugmitteltriebs, umfassend einen Zylinder (4, 24) zur Aufnahme eines linear verschiebbaren Kolbens (6, 26), die gemeinsam eine Kolben-Zylinder-Einheit (3, 23) bilden und einen mit Hydraulikfluid gefüllten Druckraum (10, 25) begrenzen, wobei eine Relativbewegung zwischen dem Kolben (6, 26) und dem Zylinder (4, 24) eine Strömung des Hydraulikfluids von dem Druckraum (10, 25) in einen Vorratsraum (12, 22) oder in umgekehrter Richtung auslöst, **dadurch gekennzeichnet, dass** eine Strömung des Hydraulikfluids von dem Vorratsraum (10, 22) in den Druckraum (10, 25) über zumindest ein druckabhängig öffnendes, als Einwegventil ausgebildetes Ringfederventil (15, 20) erfolgt, wobei zur Bildung des Ringfederventils (15, 20) entweder
innerhalb des Zylinders (4) im Bereich des Druckraums (10) zumindest eine Öffnung (19) vorgesehen ist, die mit einem innerhalb des Zylinders (4) angeordneten, in Schließrichtung vorgespannten Federelement (17) zusammenwirkt,
oder
ein Federelement (27) vorgesehen ist, das den Zylinder (24) umschließt und mit zumindest einer mit dem Vorratsraum (22) verbundenen Öffnung (29) zusammenwirkt.

2. Hydraulisches Spannsystem nach Anspruch 1, **dadurch gekennzeichnet, dass** die Öffnung (29) als radiale Bohrung in einem dem Zylinder (34) druckraumseitig zugeordneten Verschlusselement (21) eingebracht und mit einer Sacklochbohrung (28) des Verschlusselements (21) verbunden ist.

3. Hydraulisches Spannsystem nach zumindest einem der Ansprüche 1 oder 2, **dadurch gekennzeichnet, dass** der Zylinder (4) in einer Ebene mehrere umfangsverteilt positionierte radiale Öffnungen (19) umfasst, die in einer Neutralstellung der Kolben-Zylinder-Einheit (3) von dem Federelement (17) verschlossen sind.

4. Hydraulisches Spannsystem nach zumindest einem der Ansprüche 1 bis 3, **gekennzeichnet durch** eine Kolben-Zylinder-Einheit (3), deren Zuströmweg (16, 34) das als Ringfederventil (15, 20) ausgebildete Einwegventil sowie deren Abflussweg ein sich zwischen dem Kolben (6, 26) und dem Zylinder (4, 24) einstellender Leckspalt (11, 31) zugeordnet ist.

5. Hydraulisches Spannsystem nach zumindest einem der Ansprüche 1 bis 4, **dadurch gekennzeichnet, dass** der Zylinder (4) zur Aufnahme des Federelementes (17) innenseitig eine V-förmig gespreizte Ringnut (18) aufweist.

6. Hydraulisches Spannsystem nach zumindest einem der Ansprüche 1 bis 5, **dadurch gekennzeichnet, dass** als Federelement (17, 27) ein radial vorgespannter Sprengring eingesetzt ist.

7. Hydraulisches Spannsystem nach zumindest einem der Ansprüche 1 bis 6, **dadurch gekennzeichnet, dass** ein aus einem runden Federdraht hergestelltes Federelement (17, 27) eingesetzt ist.

8. Hydraulisches Spannsystem nach zumindest einem der Ansprüche 1 bis 7, **dadurch gekennzeichnet, dass** die zumindest eine Öffnung (19, 29) des Zylinders (4) oder des Verschlusselementes (21) mit einem aus Kunststoff hergestellten Federelement (17, 27) zusammenwirkt.

9. Hydraulisches Spannsystem nach zumindest einem der Ansprüche 1 bis 8, **dadurch gekennzeichnet, dass** der Zuströmweg (16) für das Hydraulikfluid sich zwischen dem Vorratsraum (12) und einem Ringkanal erstreckt, der im Bereich der Öffnung (19) des Zylinders (4) der Kolben-Zylinder-Einheit (3) eingebracht ist.

10. Hydraulisches Spannsystem nach zumindest einem der Ansprüche 1 bis 9, **dadurch gekennzeichnet, dass** eine formschlüssige Positionierung zwischen dem Federelement (17, 27) und dem Zylinder (4) oder dem Verschlusselement (21) vorgesehen ist.

## Claims

1. Hydraulic tensioning system of a traction mechanism drive, comprising a cylinder (4, 24) for receiving a linearly displaceable piston (6, 26), which together form a piston/cylinder unit (3, 23) and delimit a pressure space (10, 25) which is filled with hydraulic fluid, a relative movement between the piston (6, 26) and the cylinder (4, 24) triggering a flow of the hydraulic fluid from the pressure space (10, 25) into a storage space (12, 22) or in the reverse direction, **characterized in that** a flow of the hydraulic fluid from the storage space (10, 22) into the pressure space (10, 25) takes place via at least one annular spring valve (15, 20) which opens in a pressure-dependent manner and is configured as a one-way valve, wherein, in order to form the annular spring valve (15, 20), either
at least one opening (19) is provided within the cylinder (4) in the region of the pressure space (10), which at least one opening (19) interacts with a spring element (17) which is arranged within the cylinder (4) and is prestressed in the closing direction,
or
a spring element (27) is provided which encloses the cylinder (24) and interacts with at least one opening (29) which is connected to the storage space (22).

2. Hydraulic tensioning system according to Claim 1, **characterized in that** the opening (29) is made as a radial hole in a closure element (21), which is assigned to the cylinder (34) on the pressure-space side, and is connected to a blind hole (28) of the closure element (21).

3. Hydraulic tensioning system according to at least either of Claims 1 and 2, **characterized in that** the cylinder (4) comprises, in one plane, a plurality of radial openings (19) which are positioned distributed over the circumference and are closed by the spring element (17) in a neutral position of the piston/cylinder unit (3).

4. Hydraulic tensioning system according to at least one of Claims 1 to 3, **characterized by** a piston/cylinder unit (3), the inflow path (16, 34) of which is assigned the one-way valve which is configured as an annular spring valve (15, 20) and the outflow path of which is assigned a leakage gap (11, 31) which is produced between the piston (6, 26) and the cylinder (4, 24).

5. Hydraulic tensioning system according to at least one of Claims 1 to 4, **characterized in that** the cylinder (4) has, on the inner side, an annular groove (18) which is spread in a V-shape for receiving the spring element (17).

6. Hydraulic tensioning system according to at least one of Claims 1 to 5, **characterized in that** a radially prestressed circlip is used as spring element (17, 27).

7. Hydraulic tensioning system according to at least one of Claims 1 to 6, **characterized in that** a spring element (17, 27) which is produced from a round spring wire is used.

8. Hydraulic tensioning system according to at least one of Claims 1 to 7, **characterized in that** the at least one opening (19, 29) of the cylinder (4) or of the closure element (21) interacts with a spring element (17, 27) which is produced from plastic.

9. Hydraulic tensioning system according to at least one of Claims 1 to 8, **characterized in that** the inflow path (16) for the hydraulic fluid extends between the storage space (12) and an annular channel which is made in the region of the opening (19) of the cylinder (4) of the piston/cylinder unit (3).

10. Hydraulic tensioning system according to at least one of Claims 1 to 9, **characterized in that** a positively locking positioning means is provided between the spring element (17, 27) and the cylinder (4) or the closure element (21).

## Revendications

1. Système tendeur hydraulique pour un entraînement à moyen de traction, comprenant un cylindre (4, 24) pour recevoir un piston (6, 26) déplaçable linéairement, lesquels forment ensemble une unité cylindre-piston (3, 23) et délimitent un espace de pression (10, 25) rempli de fluide hydraulique, un mouvement relatif entre le piston (6, 26) et le cylindre (4, 24) déclenchant un écoulement du fluide hydraulique depuis l'espace de pression (10, 25) dans un espace de réserve (12, 22) ou dans la direction inverse, **caractérisé en ce qu'**un écoulement du fluide hydraulique depuis l'espace de réserve (10, 22) dans l'espace de pression (10, 25) s'effectue par le biais d'au moins une soupape à ressort annulaire (15, 20) réalisée sous forme de soupape à une voie s'ouvrant en fonction de la pression, pour la formation de la soupape à ressort annulaire (15, 20) soit
au moins une ouverture (19) étant prévue à l'intérieur du cylindre (4) dans la région de l'espace de pression (10), laquelle ouverture coopère avec un élément de ressort (17) précontraint dans la direction de fermeture, disposé à l'intérieur du cylindre (4),
soit
un élément de ressort (27) étant prévu, lequel entoure le cylindre (24) et coopère avec au moins une ouverture (29) connectée à l'espace de réserve (22).

2. Système tendeur hydraulique selon la revendication 1, **caractérisé en ce que** l'ouverture (29) est pratiquée sous forme d'alésage radial dans un élément de fermeture (21) associé au cylindre (34) du côté de l'espace de pression, et est connectée à un alésage borgne (28) de l'élément de fermeture (21).

3. Système tendeur hydraulique selon au moins l'une quelconque des revendications 1 ou 2, **caractérisé en ce que** le cylindre (4) comprend, dans un plan, plusieurs ouvertures radiales (19) positionnées de manière répartie sur la périphérie, lesquelles sont fermées dans une position neutre de l'unité cylindre-piston (3) par l'élément de ressort (17).

4. Système tendeur hydraulique selon au moins l'une quelconque des revendications 1 à 3, **caractérisé par** une unité cylindre-piston (3), dont la trajectoire d'afflux (16, 34) est associée à la soupape à une voie réalisée sous forme de soupape à ressort annulaire (15, 20) et dont la trajectoire de sortie est associée à une fente de fuite (11, 31) formée entre le piston (6, 26) et le cylindre (4, 24).

5. Système tendeur hydraulique selon au moins l'une quelconque des revendications 1 à 4, **caractérisé en ce que** le cylindre (4) présente, pour recevoir l'élément de ressort (17), du côté intérieur, une rainure annulaire (18) écartée en forme de V.

6. Système tendeur hydraulique selon au moins l'une quelconque des revendications 1 à 5, **caractérisé en ce que** l'on utilise en tant qu'élément de ressort (17, 27) un jonc précontraint radialement.

7. Système tendeur hydraulique selon au moins l'une quelconque des revendications 1 à 6, **caractérisé en ce que** l'on utilise un élément de ressort (17, 27) fabriqué en fil métallique rond à ressort.

8. Système tendeur hydraulique selon au moins l'une quelconque des revendications 1 à 7, **caractérisé en ce que** l'au moins une ouverture (19, 29) du cylindre (4) ou de l'élément de fermeture (21) coopère avec un élément de ressort (17, 27) fabriqué en plastique.

9. Système tendeur hydraulique selon au moins l'une quelconque des revendications 1 à 8, **caractérisé en ce que** la trajectoire d'afflux (16) pour le fluide hydraulique s'étend entre l'espace de réserve (12) et un canal annulaire qui est pratiqué dans la région de l'ouverture (19) du cylindre (4) de l'unité cylindre-piston (3).

10. Système tendeur hydraulique selon au moins l'une quelconque des revendications 1 à 9, **caractérisé en ce qu'**un positionnement par engagement positif est prévu entre l'élément de ressort (17, 27) et le cylindre (4) ou l'élément de fermeture (21).
